# EUROPEAN PATENT SPECIFICATION

(11) **EP 3 378 303 B1**
(45) Date of publication and mention of the grant of the patent: **01.01.2020**
(21) Application number: 17175045.8
(22) Date of filing: 08.06.2017
(51) Int. Cl.: A01G 9/14, A01G 31/02

(54) **PLANT CULTIVATION APPARATUS USING AN UP-DOWN SYSTEM**
PFLANZENZUCHTVORRICHTUNG MIT VERWENDUNG EINES UP-DOWN-SYSTEMS
APPAREIL DE CULTURE DE PLANTES FAISANT APPEL À UN SYSTÈME MONTÉE-DESCENTE

(30) Priority: 23.03.2017 KR 20170036688
(43) Date of publication of application: 26.09.2018
(73) Proprietor: Green Plus Co., Ltd., Yesan-gun, Chungcheongnam-do 32446 (KR); Park, Yeong Hwan, Gyeonggi-do 17782 (KR)
(72) Inventor: Park, Yeong Hwan, Gyeonggi-do 17782 (KR)
(74) Representative: Beetz & Partner mbB

(56) References cited:
- CN-U- 206 078 442
- ES-A1- 2 207 409
- JP-A- 2016 202 048
- KR-B1- 101 697 120
- KR-B1- 101 699 692

## Description

### [TECHNICAL FIELD]

The present invention relates to a plant cultivation apparatus using an up-down system, and more particularly, to a plant cultivation apparatus using an up-down system enabling mass production of plants by allowing the entire area of a greenhouse to be used as a cultivation space.

### [BACKGROUND ART]

In general, for cultivation with soil and hydroponics in a greenhouse, at least half of the area of the greenhouse is used for a passage of workers during seeding, cultivation work, or harvest. Thus, there was a problem that as the area for cultivation reduces in half, production volume reduces, for which not only production costs but also consumer prices increases, resulting in an increase in cost burden of both producers and customers.

In order to solve these problems, the present applicant has filed Korean Patent Application No. 2016-0069465 covering a plant cultivation apparatus including: a driving unit installed at trusses horizontally crossing top portions of a greenhouse and including a motor, a drive shaft, a plurality of driven shafts, and a plurality of worm gear reducers, a plurality of elevating units including a plurality of main sprockets axially fixed respectively to the plurality of driven shafts at regular intervals in a forward and backward direction, a chain having a main part interlocking with the center of the main sprocket, a left part directed downward from a left side of the main sprocket, and a right part directed downward from a right side of the main sprocket, left and right supports whose top ends are vertically installed on the bottom of the truss to be spaced apart from the axially fixed position of the main sprocket at the same interval respectively, left and right guide sprockets axially installed at lower portions of the supports to be located at lower left and right positions than the main sprocket on which the left and right parts are hung downward, and cultivation gutters respectively ascending and descending in a state of being coupled to the left and right parts of the chain.

Normally, a plurality of cultivation gutters is hung on the same horizontal line at the same height from the ground at regular intervals. When a passage of workers is required during seeding, cultivation work, or harvest, the plurality of elevating units raise and lower the left and right cultivation gutters alternately one by one by the operation of the driving unit to form a passage of workers between the raised cultivation gutters. Thus, the entire area of the greenhouse may be used as a cultivation area, so that the productivity may be double.

However, in order to raise and lower the left and right cultivation gutters alternately one by one by operating the plurality of elevating units using one driving unit, the plant cultivation apparatus of the conventional earlier application includes the driving shat rotatably installed by the motor, the plurality of driven shafts installed perpendicular to the drive shaft, and the plurality of worm gear reducers respectively installed at intersections of the drive shaft and the driven shafts and configured to simultaneously rotate the driven shafts by transferring a decelerated rotational force of the drive shaft thereto. Since the structure of operating a plurality of elevating members by transferring a driving force of the motor is complicated, a large number of parts are required, and installation time increases, installation and maintenance are very difficult and troublesome. Also, the cost burden of producers and customers cannot be reduced since there is a limit to lowering production costs because of rising costs for installation and maintenance and repair.

Another plant cultivation apparatus using an up-down system is known from KR 101 699 692 B1.

### [DETAILED DESCRIPTION OF THE INVENTION]

### [Technical Problem]

Accordingly, the present invention is made in an effort to resolve the problems of the conventional art. It is an object of the present invention to provide a plant cultivation apparatus using an up-down system which enables installation and maintenance to be very simple and easy, while greatly reducing the cost burden of producers and consumers.

### [Technical Solution]

In order to achieve the above objects, the present invention provides a plant cultivation apparatus using an up-down system according to claim 1, including: a driving unit 20 installed at trusses 12 installed at regular intervals in a forward and backward direction to horizontally cross tops of inner pillars 11 of a greenhouse 10, an elevating unit 30 installed to operate by the driving unit 20, and left and right cultivation gutters 40 and 40' configured to ascend and descend by the elevating unit 30; wherein the driving unit 20 comprises a deceleration motor 21, a drive shaft 22 axially installed on the bottoms of middle crossbars 121 of the trusses 12 to cross the middle crossbars 121 in the forward and backward direction and rotating by the deceleration motor 21, and reel members 23 axially installed at the drive shaft 22 at regular intervals and having a spiral winding groove 231; the elevating unit 30 is configured with a set of five elevating members of first to fifth elevating members 31 to 35; the first elevating member 31 comprises first left and right guide pulleys 321 installed on the top of the middle crossbar 121 of the truss 12 at rear left and right portions thereof to be located at upper positions than the drive shaft 22 and spaced apart from left and right sides of the drive shaft 22 at the same interval respectively and a first elevating wire 311 having a middle part spirally wound several times around a rear end portion of the winding groove 231, a left part directed upward from a front lower portion of the left side, hung on a top portion of the first left guide pulley 321 located at a front position between the first left and right guide pulleys 321, and directed downward from a left side of the top portion thereof, and a right part directed upward from a rear lower portion of the right side, hung on a top portion of the first right guide pulley 321 located at a rear position, and directed downward from a right side of the top portion thereof; the second elevating member 32 comprises second left and right guide pulleys 322 installed on the top of a lower crossbar 122 of the truss 12 at front left and right positions thereof to be located at lower positions than the first left and right guide pulleys 321 and spaced apart from left and right sides thereof at the same interval respectively and a second elevating wire 312 having a middle part spirally wound several times around a front end portion of the winding groove 231, a left part directed downward from a rear upper portion of the left side, hung on a top portion of the second left guide pulley 322 located at a rear position between the second left and right guide pulleys 322, and directed downward from a left side of the top portion thereof, and a right part directed downward from a rear upper portion of the right side, hung on a top portion of the second right guide pulley 322, and directed downward from a right side of the top portion thereof; the third elevating member 33 comprises third left and right guide pulleys 323 installed on the top of the middle crossbar 121 at front left and right portions thereof to be located at upper positions than the second left and right guide pulleys 322 and spaced apart from left and right sides thereof at the same interval respectively and a third elevating wire 313 having a middle part spirally wound several times around the winding groove 231 to be isolated from the rear portion of the middle part of the second elevating wire 312, a left part directed upward from a front lower portion of the left side, hung on a top portion of the third left guide pulley 323 located at a front position between the third left and right guide pulleys 323, and directed downward from a left side of the top portion thereof, and a right part directed upward from a rear lower portion of the right side, hung on a top portion of the third right guide pulley 323 located at a rear position, and directed downward from a right side of the top portion thereof; the fourth elevating member 34 comprises fourth left and right guide pulleys 324 installed on the top of a lower crossbar 122 at rear left and right positions thereof to be located at lower positions than the third left and right guide pulleys 323 and spaced apart from left and right sides thereof at the same interval respectively and a fourth elevating wire 314 having a middle part spirally wound several times around the winding groove 231 to be isolated from the front portion of the middle part of the first elevating wire 311, a left part directed downward from a rear upper portion of the left side, hung on a top portion of the fourth left guide pulley 324 located at a rear position between the fourth left and right guide pulleys 324, and directed downward from a left side of the top portion thereof, and a right part directed downward from a rear upper portion of the right side, hung on a top portion of the fourth right guide pulley 324 located at a front position, and directed downward from a right side of the top portion thereof; and the fifth elevating member 35 comprises fifth left and right guide pulleys 325 installed on the top of the middle crossbar 121 at front and rear portions thereof to be located at upper positions than the fourth left and right guide pulleys 324 and spaced apart from left and right sides thereof at the same interval respectively and a fifth elevating wire 315 having a middle part spirally wound several times around the winding groove 231 in a state where the front portion of the middle part is isolated from the rear portion of the middle part of the third elevating wire 313 and the rear portion of the middle part is isolated from the front portion of the fourth elevating wire 314, a left part directed upward from a front lower portion of the left side, hung on a top portion of the fifth left guide pulley 325 located at a front position between the fifth left and right guide pulleys 325, and directed downward from a left side of the top portion thereof, and a right part directed upward from a rear lower portion of the right side, hung on a top portion of the fifth right guide pulley 323 located at a rear position, and directed downward from a right side of the top portion thereof; wherein the left and right cultivation gutters 40 and 40' of the first to fifth elevating members 31 to 35 ascend and descend alternately in turn in a zigzag shape by using one deceleration motor 21 and one drive shaft 22.

### [ADVANTAGEOUS EFFECTS]

The plant cultivation apparatus using an up-down system according to the present invention is configured to simultaneously and directly transfer a driving force of one deceleration motor to a plurality of elevating members via one drive shaft. Thus, there is an advantage that the structure is simplified and installation and maintenance are very simple and easy. In addition, the cost burden of producers and consumers may be reduced by inhibiting an increase in production costs due to a considerable reduction in related costs.

### [BRIEF DESCRIPTION OF DRAWINGS]

FIG. 1 is a schematic front view illustrating a portion of a greenhouse in which a plant cultivation apparatus using an up-down system according to an exemplary embodiment is installed.
FIG. 2 is a plan view illustrating the plant cultivation apparatus using the up-down system of FIG. 1 from which some elements are omitted.
FIG. 3 is a front view illustrating an enlarged portion of FIG. 1.
FIGS. 4A and 4B are enlarged plan and side views of FIG. 3.
FIG. 5 is a front view illustrating a state where heights of cultivation gutters in FIG. 1 are adjusted.

### [DETAILED DESCRIPTION OF THE EMBODIMENTS]

Hereinafter, a plant cultivation apparatus using an up-down system according to embodiments of the present invention will be described in more detail with reference to the accompanying drawings.

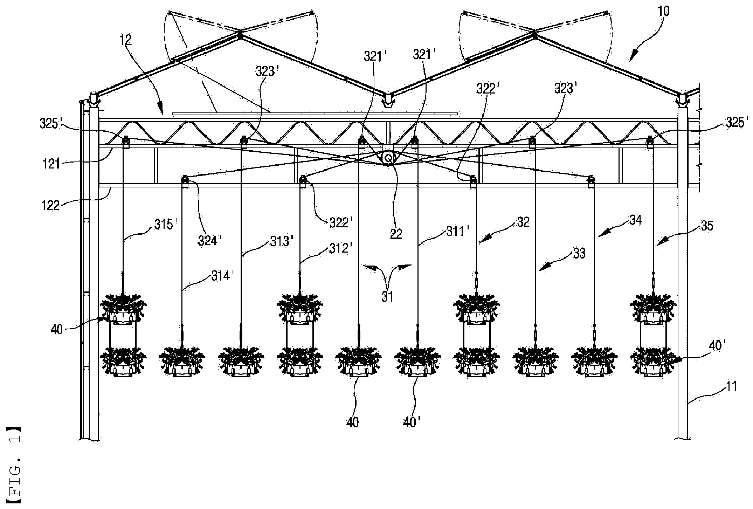

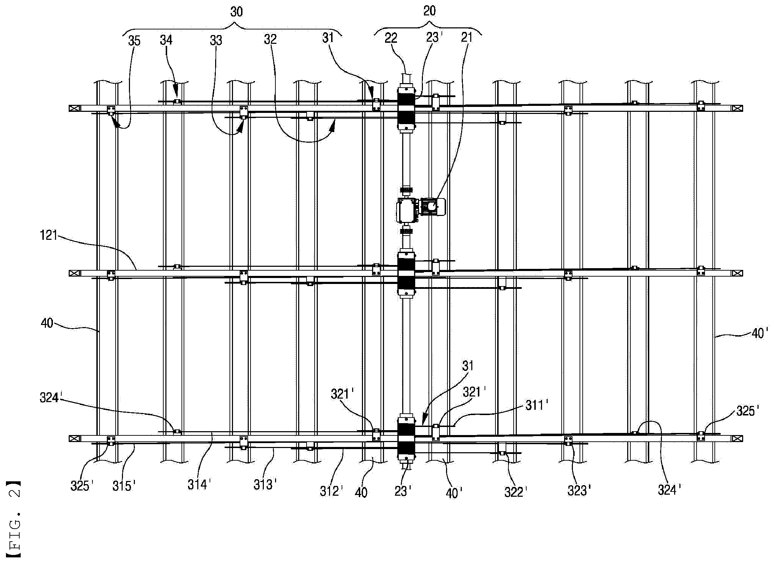

FIG. 1 is a schematic front view illustrating a portion of a greenhouse in which a plant cultivation apparatus using an up-down system according to an exemplary embodiment is installed. FIG. 2 is a plan view illustrating the plant cultivation apparatus using the up-down system of FIG. 1 from which some elements are omitted.

The plant cultivation apparatus using the up-down system according to the third exemplary embodiment of the present invention illustrated in FIGS. 1 and 2 includes a driving unit 20 installed at trusses 12 installed at regular intervals in a forward and backward direction to horizontally cross tops of pillars 11 of a greenhouse 10 having a general roof structure widely used in the art, an elevating unit 30 installed to ascend and descend by the driving unit, and cultivation gutters 40 and 40' respectively hanging from left and right parts of the elevating unit.

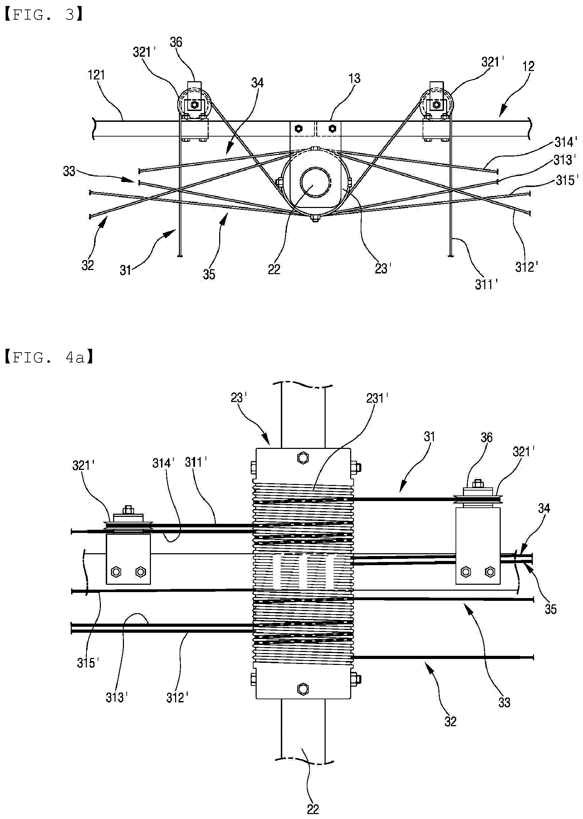

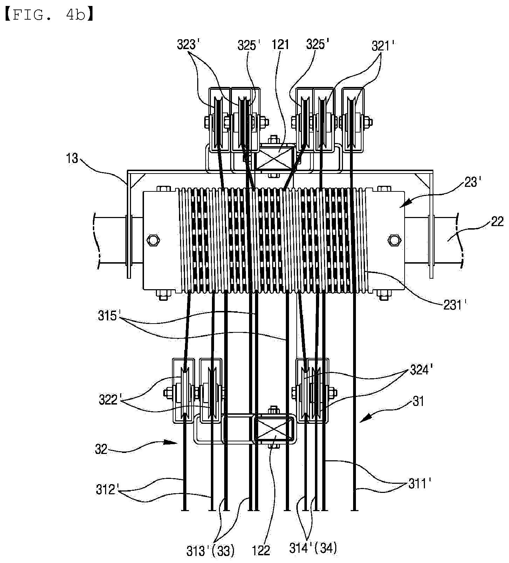

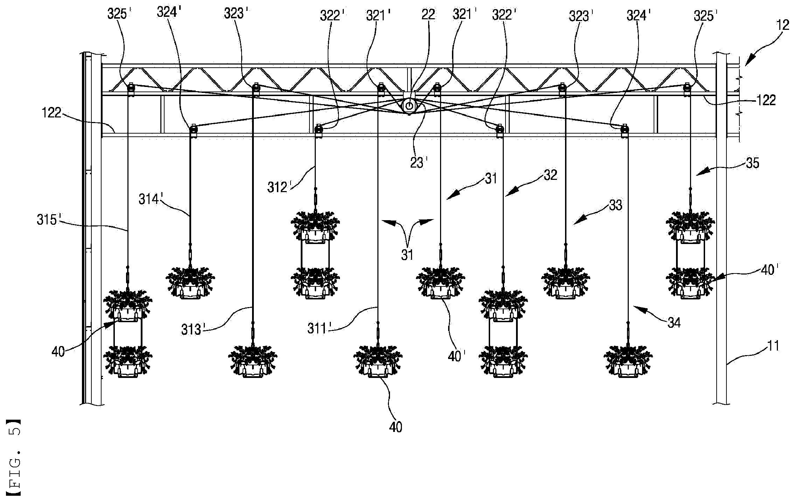

FIG. 3 is a front view illustrating an enlarged portion of FIG. 1. FIGS. 4A and 4B are enlarged plan and side views of FIG. 3. FIG. 5 is a front view illustrating a state where heights of cultivation gutters are adjusted in FIG. 1.

The driving unit 20 may include a deceleration motor 21, a drive shaft 22 installed on the bottoms of middle crossbars 121 of the trusses 12 with a bearing to cross the middle crossbars 121 in the forward and backward direction and rotating forward and backward by the deceleration motor, and reel members 23 axially fixed to the drive shaft at regular intervals in the forward and backward direction, having a spiral winding groove 231 on the outer surface thereof, and having a predetermined length.

The reel member 23 is installed on the bottom of the middle crossbar 121 with the bearing 13 at a portion corresponding to the drive shaft 22 such that the middle crossbar 121 is located in the middle of the reel member 23.

In this way, loads of the cultivation gutters 40 and 40' which are respectively hung on the reel member 23 are not concentrated on the drive shaft 22 but distributed by the bearing 13, which will be described later, and thus shaft deformation or the like does not occur even after long-term use.

The elevating unit 30 includes first to fifth elevating members 31 to 35.

The first to fifth elevating members 31 to 35 includes first to fifth elevating wires 311 to 315 having middle parts spirally wound several times at predetermined portions of the winding groove 231 spirally formed on the reel member 23 to be isolated from each other and left right ends to which cultivation gutters 40 and 40' are coupled, and first to fifth left and right guide pulleys 321 to 325 on which left and right parts of the first to fifth elevating wires are hung downward respectively.

Meanwhile, the left and right parts of the first to fifth elevating wires 311 to 315 are wound around the winding groove or released therefrom at different positions of left and right sides of the reel member 23 in accordance with portions of the winding groove 231 around which the middle parts are wound several times. Thus, the first to fifth left and right guide pulleys 321 to 325 are installed at the truss 12 to be isolated from each other in the forward and backward direction at intervals corresponding to the positions where the left and right parts of the first to fifth elevating wires are wound around or released from the winding groove.

The first left and right guide pulleys 321 of the first elevating member 31 are installed on the top of the middle crossbar 121 at rear left and right portions thereof to be located at upper positions than the drive shaft 22 and spaced apart from left and right sides of the drive shaft 22 at the same interval respectively. The first elevating wire 311 is installed such that the middle part is spirally wound several times around a rear end portion of the winding groove 231, the left part is directed upward from a front lower portion of the left side, hung on a top portion of the first left guide pulley located at a front position between the first left and right guide pulleys, and directed downward from a left side of the top portion thereof, and the right part is directed upward from a rear lower portion of the right side, hung on a top portion of the first right guide pulley located at a rear position, and directed downward from a right side of the top portion thereof.

In this way, when the deceleration motor 21 is driven forward and the reel member 23 rotates clockwise by the drive shaft 22, a front portion of the middle part of the first elevating wire 311 wound around the winding groove 231 is released to the left and a rear portion of the middle part is wound to the left so that the first elevating wire moves to the left, and thus the right part of the first elevating wire ascends and the left part thereof descends in accordance with guidance of the first left and right guide pulleys 321, and the left cultivation gutter 40 descends and the right cultivation gutter 40' ascends. On the contrary, when the deceleration motor is driven backward and the reel member rotates counterclockwise, the front portion of the middle part of the first elevating wire is wound to the right and the rear portion of the middle part is released to the right so that the first elevating wire moves to the right, and thus the right cultivation gutter descends and the left cultivation gutter ascends.

The second left and right guide pulleys 322 of the second elevating member 32 are installed on the top of the lower crossbar 122 at front left and right portions thereof to be located at lower positions than the first left and right guide pulleys 321 and spaced apart from left and right sides of the first left and right guide pulleys 321 at the same interval respectively. The second elevating wire 312 is installed such that the middle part is spirally wound several times around a front end portion of the winding groove 231, a left part is directed downward from a rear upper portion of the left side, hung on a top portion of the second left guide pulley located at a rear position between the second left and right guide pulleys, and directed downward from a left side of the top portion thereof, and a right part is directed downward from a rear upper portion of the right side, hung on a top portion of the second right guide pulley located at a front position, and directed downward from a right side of the top portion thereof.

In this way, when the deceleration motor 21 is driven forward and the reel member 23 rotates clockwise by the drive shaft 22, a front portion of the middle part of the second elevating wire 312 wound around the winding groove 231 is released to the right and a rear portion of the middle part is wound to the right so that the second elevating wire moves to the right, and thus the right part of the second elevating wire descends and the left part thereof ascends in accordance with guidance of the second left and right guide pulleys 322, and the left cultivation gutter 40 ascends and the right cultivation gutter 40' descends. On the contrary, when the deceleration motor is driven backward and the reel member rotates counterclockwise, the front portion of the middle part of the second elevating wire is wound to the left and the rear portion of the middle part is released to the left so that the second elevating wire moves to the left, and thus the right cultivation gutter ascends and the left cultivation gutter descends.

The third left and right guide pulleys 323 of the third elevating member 33 are installed on the top of the middle crossbar 121 at front left and right portions thereof to be located at upper positions than the second left and right guide pulleys 322 and spaced apart from left and right sides of the second left and right guide pulleys 322 at the same interval respectively. The third elevating wire 313 is installed such that the middle part is spirally wound several times around the winding groove 231 to be isolated from the rear portion of the middle part of the second elevating wire 312, a left part is directed upward from a front lower portion of the left side, hung on a top portion of the third left guide pulley located at a front position between the third left and right guide pulleys, and directed downward from a left side of the top portion thereof, and a right part is directed upward from a rear lower portion of the right side, hung on a top portion of the third right guide pulley located at a rear position, and directed downward from a right side of the top portion thereof.

In this way, when the deceleration motor 21 is driven forward and the reel member 23 rotates clockwise by the drive shaft 22, a front portion of the middle part of the third elevating wire 313 wound around the winding groove 231 is released to the left and a rear portion of the middle part is wound to the left so that the third elevating wire moves to the left, and thus the right part of the third elevating wire ascends and the left part thereof descends in accordance with guidance of the third left and right guide pulleys 323, and the left cultivation gutter 40 descends and the right cultivation gutter 40' ascends. On the contrary, when the deceleration motor is driven backward and the reel member rotates counterclockwise, the front portion of the middle part of the third elevating wire is wound to the right and the rear portion of the middle part is released to the right so that the third elevating wire moves to the right, and thus the right cultivation gutter descends and the left cultivation gutter ascends.

The fourth left and right guide pulleys 324 of the fourth elevating member 34 are installed on the top of the lower crossbar 122 at rear left and right portions thereof to be located at lower positions than the third left and right guide pulleys 323 and spaced apart from left and right sides of the third left and right guide pulleys 323 at the same interval respectively. The fourth elevating wire 314 is installed such that the middle part is spirally wound several times around the winding groove 231 to be isolated from the front portion of the middle part of the first elevating wire 311, the left part is directed downward from a rear upper portion of the left side, hung on a top portion of the fourth left guide pulley located at a rear position between the fourth left and right guide pulleys, and directed downward from a left side of the top portion thereof, and a right part is directed downward from a rear upper portion of the right side, hung on a top portion of the fourth right guide pulley located at a front position, and directed downward from a right side of the top portion thereof.

In this way, when the deceleration motor 21 is driven forward and the reel member 23 rotates clockwise by the drive shaft 22, a front portion of the middle part of the fourth elevating wire 314 wound around the winding groove 231 is released to the right and a rear portion of the middle part is wound to the right so that the fourth elevating wire moves to the right, and thus the right part of the fourth elevating wire descends and the left part thereof ascends in accordance with guidance of the fourth left and right guide pulleys 324, and the left cultivation gutter 40 ascends and the right cultivation gutter 40' descends. On the contrary, when the deceleration motor is driven backward and the reel member rotates counterclockwise, the front portion of the middle part of the fourth elevating wire is wound to the left and the rear portion of the middle part is released to the left so that the fourth elevating wire moves to the left, and thus the right cultivation gutter ascends and the left cultivation gutter descends.

The fifth left and right guide pulleys 325 of the fifth elevating member 35 are installed on the top of the middle crossbar 121 at front and rear sides thereof to be located at upper positions than the fourth left and right guide pulleys 324 and spaced apart from left and right sides of the fourth left and right guide pulleys 324 at the same interval respectively. The fifth elevating wire 315 is installed such that the middle part is spirally wound several times around the winding groove 231 in a state where the middle part is isolated from the rear portion of the middle part of the third elevating wire 313 and the front portion of the fourth elevating wire 314, a left part is directed upward from a front lower portion of the left side, hung on a top portion of the fifth left guide pulley located at a front position between the fifth left and right guide pulleys, and directed downward from a left side of the top portion thereof, and a right part is directed upward from a rear lower portion of the right side, hung on a top portion of the fifth right guide pulley located at a rear position, and directed downward from a right side of the top portion thereof.

In this way, when the deceleration motor 21 is driven forward and the reel member 23 rotates clockwise by the drive shaft 22, a front portion of the middle part of the fifth elevating wire 315 wound around the winding groove 231 is released to the left and a rear portion of the middle part thereof is wound to the left so that the fifth elevating wire moves to the left, and thus the right part of the fifth elevating wire ascends and the left part thereof descends in accordance with guidance of the fifth left and right guide pulleys 325, and the left cultivation gutter 40 descends and the right cultivation gutter 40' ascends. On the contrary, when the deceleration motor is driven backward and the reel member rotates counterclockwise, the front portion of the middle part of the fifth elevating wire is wound to the right and the rear portion of the middle part is released to the right so that the fifth elevating wire moves to the right, and thus the right cultivation gutter descends and the left cultivation gutter ascends.

When the first to fifth elevating members 31 to 35 are installed as described above, the left and right cultivation gutters 40 and 40' of the first to fifth elevating members may ascend and descend alternately in turn in a zigzag shape with the aid of only one deceleration motor 21 and one drive shaft 22.

That is, when the reel member 23 rotates clockwise by the drive shaft 22 in response to the forward driving of the deceleration motor 21 in a state where the left and right cultivation gutters 40 and 40' of the first to fifth elevating members 31 to 35 are positioned on the same horizontal line at the same height as illustrated in FIG. 1, the middle parts of the first, third, and fifth elevating wires 311, 313, and 315 move to the left simultaneously and the second and fourth elevating wires 312 and 314 move to the right simultaneously.

In this case, the left cultivation gutters 40 respectively coupled to the left ends of the first, third, and fifth elevating wires 311, 313, and 315 descend simultaneously and the right cultivation gutters 40' respectively coupled to the right ends thereof ascend simultaneously, while the left cultivation gutters 40 respectively coupled to the left ends of the second and fourth elevating wires 312 and 314 ascend simultaneously and the right cultivation gutters 40' respectively coupled to the right ends thereof descend simultaneously. Thus, the left and right cultivation gutters simultaneously ascend and descend alternately in turn in the zigzag shape by using only one deceleration motor 21, one drive shaft 22, and one real member 23 to form a passage for workers as illustrated in FIG. 2.

Meanwhile, although it has been described that the elevating unit 30 is configured with a set of five elevating members, i.e., first to fifth elevating members 31 to 35, the present invention is not limited thereto. The elevating units each configured with a set of three, four, or more elevating members may also be continuously aligned horizontally or vertically in accordance of widthwise and lengthwise areas of the inside of the greenhouse 10 in which the elevating units will be installed. Also, the front and rear portions where the first to fifth elevating members are installed may be modified, if required. It is obvious that such modifications are included within the scope of the invention.

Also, the first to fifth left and right guide pulleys 321 to 325 may be axially installed inside anti-dislocation brackets 36 having open left and right sides and configured to prevent the first to fifth elevating wires 311 to 315 hung on the first to fifth left and right guide pulleys from being dislocated from moving paths thereof.

Since the cultivation gutters 40 and 40' ascend and descend by leftward and rightward movement of the middle parts of the first to fifth elevating wires 311 to 315 which are spirally wound several times around predetermined portions of the winding groove 231 of the reel member 23, the first to fifth elevating wires does not slip during leftward and rightward movement thereof. Thus, a driving force of the drive shaft 22 is entirely transferred thereto enabling the cultivation gutters to ascend and descend smoothly and accurately without any deviation.

According to the first to the exemplary embodiments of the present invention, the left and right cultivation gutters 40 and 40' respectively coupled to the left and right ends of the first to fifth elevating members ascend and descend alternately in turn in a zigzag shape from a state where the left and right cultivation gutters 40 and 40' are aligned on the same horizontal line at the same height by simultaneously operating the first to fifth elevating members 31 to 35 using only one deceleration motor 21 and one drive shaft 22. Thus, the plant cultivation apparatus using the up-down system according to the present invention has a simple structure and may be installed and maintained with lower costs, thereby reducing production costs resulting in decrease in cost burden of producers and consumers.

## Claims

1. A plant cultivation apparatus using an up-down system comprising a driving unit (20) installed at trusses (12) installed at regular intervals in a forward and backward direction to horizontally cross tops of inner pillars (11) of a greenhouse (10), an elevating unit (30) installed to be operated by the driving unit (20), and left and right cultivation gutters (40 and 40') configured to be ascended and descended by the elevating unit (30),
wherein the driving unit (20) comprises a deceleration motor (21), a drive shaft (22) axially installed on the bottoms of middle crossbars (121) of the trusses (12) to cross the middle crossbars (121) in the forward and backward direction and being rotated by the deceleration motor (21), and reel members (23) axially installed at the drive shaft (22) at regular intervals and having a spiral winding groove (231);
the elevating unit (30) is configured with a set of five elevating members of first to fifth elevating members (31 to 35) ;
the first elevating member (31) comprises first left and right guide pulleys (321) installed on the top of the middle crossbar (121) of the truss (12) at rear left and right portions thereof to be located at upper positions than the drive shaft (22) and spaced apart from left and right sides of the drive shaft (22) at the same interval respectively and a first elevating wire (311) having a middle part spirally wound several times around a rear end portion of the winding groove (231), a left part directed upward from a front lower portion of the left side, hung on a top portion of the first left guide pulley (321) located at a front position between the first left and right guide pulleys (321), and directed downward from a left side of the top portion thereof, and a right part directed upward from a rear lower portion of the right side, hung on a top portion of the first right guide pulley (321) located at a rear position, and directed downward from a right side of the top portion thereof;
the second elevating member (32) comprises second left and right guide pulleys (322) installed on the top of a lower crossbar (122) of the truss (12) at front left and right positions thereof to be located at lower positions than the first left and right guide pulleys (321) and spaced apart from left and right sides thereof at the same interval respectively and a second elevating wire (312) having a middle part spirally wound several times around a front end portion of the winding groove (231), a left part directed downward from a rear upper portion of the left side, hung on a top portion of the second left guide pulley (322) located at a rear position between the second left and right guide pulleys (322), and directed downward from a left side of the top portion thereof, and a right part directed downward from a rear upper portion of the right side, hung on a top portion of the second right guide pulley (322), and directed downward from a right side of the top portion thereof;
the third elevating member (33) comprises third left and right guide pulleys (323) installed on the top of the middle crossbar (121) at front left and right portions thereof to be located at upper positions than the second left and right guide pulleys (322) and spaced apart from left and right sides thereof at the same interval respectively and a third elevating wire (313) having a middle part spirally wound several times around the winding groove (231) to be isolated from the rear portion of the middle part of the second elevating wire (312), a left part directed upward from a front lower portion of the left side, hung on a top portion of the third left guide pulley (323) located at a front position between the third left and right guide pulleys (323), and directed downward from a left side of the top portion thereof, and a right part directed upward from a rear lower portion of the right side, hung on a top portion of the third right guide pulley (323) located at a rear position, and directed downward from a right side of the top portion thereof;
the fourth elevating member (34) comprises fourth left and right guide pulleys (324) installed on the top of a lower crossbar (122) at rear left and right positions thereof to be located at lower positions than the third left and right guide pulleys (323) and spaced apart from left and right sides thereof at the same interval respectively and a fourth elevating wire (314) having a middle part spirally wound several times around the winding groove (231) to be isolated from the front portion of the middle part of the first elevating wire (311), a left part directed downward from a rear upper portion of the left side, hung on a top portion of the fourth left guide pulley (324) located at a rear position between the fourth left and right guide pulleys (324), and directed downward from a left side of the top portion thereof, and a right part directed downward from a rear upper portion of the right side, hung on a top portion of the fourth right guide pulley (324) located at a front position, and directed downward from a right side of the top portion thereof; and
the fifth elevating member (35) comprises fifth left and right guide pulleys (325) installed on the top of the middle crossbar (121) at front and rear portions thereof to be located at upper positions than the fourth left and right guide pulleys (324) and spaced apart from left and right sides thereof at the same interval respectively and a fifth elevating wire (315) having a middle part spirally wound several times around the winding groove (231) in a state where the front portion of the middle part is isolated from the rear portion of the middle part of the third elevating wire (313) and the rear portion of the middle part is isolated from the front portion of the fourth elevating wire (314), a left part directed upward from a front lower portion of the left side, hung on a top portion of the fifth left guide pulley (325) located at a front position between the fifth left and right guide pulleys (325), and directed downward from a left side of the top portion thereof, and a right part directed upward from a rear lower portion of the right side, hung on a top portion of the fifth right guide pulley (323) located at a rear position, and directed downward from a right side of the top portion thereof,
wherein the left and right cultivation gutters (40 and 40') of the first to fifth elevating members (31 to 35) ascend and descend alternately in turn in a zigzag shape by using the one deceleration motor (21) and the one drive shaft (22).

2. The plant cultivation apparatus according to claim 1, wherein the first to fifth elevating wires (311 to 315) are configured to be simultaneously directed upward and downward alternately in turn toward upper positions and lower positions than the drive shaft (22) in a zigzag shape.

3. The plant cultivation apparatus according to claim 1, wherein the first to fifth elevating members (31 to 35) further comprise anti-dislocation brackets (36) in which the first to fifth left and right guide pulleys (321 to 325) are installed to prevent the first to fifth elevating wires (311 to 315) from being dislocated from moving paths thereof.

## Patentansprüche

1. Pflanzenanbauvorrichtung mit einem Auf/Ab-System, umfassend
eine Antriebseinheit (20), die an Trägern (12) installiert ist, die in regelmäßigen Abständen in Vorwärts- und Rückwärtsrichtung installiert sind, um obere Enden von inneren Säulen (11) eines Gewächshauses (10) horizontal zu kreuzen,
eine Hebeeinheit (30), die installiert ist, um von der Antriebseinheit (20) betrieben zu werden, und linke und rechte Kulturrinnen (40 und 40'), die konfiguriert sind, um von der Hebeeinheit (30) auf- und abbewegt zu werden,
wobei die Antriebseinheit (20) umfasst:
einen Verzögerungsmotor (21),
eine Antriebswelle (22), die axial auf den Unterseiten von mittleren Querstangen (121) der Träger (12) installiert ist, um die mittleren Querstangen (121) in Vorwärts- und Rückwärtsrichtung zu kreuzen, und die von dem Verzögerungsmotor (21) gedreht wird, und
Spulenelemente (23), die axial an der Antriebswelle (22) in regelmäßigen Abständen installiert sind und eine spiralförmig gewundene Nut (231) aufweisen;
wobei die Hebeeinheit (30) mit einem Fünf-Hebeelemente-Satz von ersten bis fünften Hebeelementen (31 bis 35) konfiguriert ist;
wobei das erste Hebeelement (31) umfasst:
erste linke und rechte Führungsrollen (321), die auf der Oberseite der mittleren Querstange (121) des Trägers (12) an hinteren linken und rechten Abschnitten davon installiert sind, um in höheren Positionen als die Antriebswelle (22) angeordnet zu sein, und die links und rechts von der Antriebswelle (22) in jeweils gleichem Abstand von dieser angeordnet sind, und
einen ersten Hebedraht (311) mit
einem Mittelteil, der mehrfach spiralförmig um einen hinteren Endabschnitt der Wickelnut (231) gewickelt ist,
einem linken Teil, der von einem vorderen unteren Abschnitt der linken Seite nach oben gerichtet ist, auf einem oberen Abschnitt der ersten linken Führungsrolle (321) aufgehängt ist, die sich in einer vorderen Position unter den ersten linken und rechten Führungsrollen (321) befindet, und von einer linken Seite des oberen Abschnitts davon nach unten gerichtet ist, und
einem rechten Teil, der von einem hinteren unteren Abschnitt der rechten Seite nach oben gerichtet ist, auf einem oberen Abschnitt der ersten rechten Führungsrolle (321) aufgehängt ist, die sich in einer hinteren Position befindet, und von einer rechten Seite des oberen Abschnitts davon nach unten gerichtet ist;
wobei das zweite Hebeelement (32) umfasst:
zweite linke und rechte Führungsrollen (322), die auf der Oberseite einer unteren Querstange (122) des Trägers (12) in vorderen linken und rechten Positionen davon installiert sind, um in tieferen Positionen als die erste linke und rechte Führungsrolle (321) angeordnet zu sein und die links und rechts von diesen in jeweils gleichem Abstand von diesen angeordnet sind, und
einen zweiten Hebedraht (312) mit
einem Mittelteil, der mehrmals spiralförmig um einen vorderen Endabschnitt der Wickelnut (231) gewickelt ist,
einem linken Teil, der von einem hinteren oberen Abschnitt der linken Seite nach unten gerichtet ist, an einem oberen Abschnitt der zweiten linken Führungsrolle (322) aufgehängt ist, die sich in einer hinteren Position unter den zweiten linken und rechten Führungsrollen (322) befindet, und von einer linken Seite des oberen Abschnitts davon nach unten gerichtet ist, und
einem rechten Teil, der von einem hinteren oberen Abschnitt der rechten Seite nach unten gerichtet ist, an einem oberen Abschnitt der zweiten rechten Führungsrolle (322) aufgehängt und von einer rechten Seite des oberen Abschnitts davon nach unten gerichtet ist;
wobei das dritte Hebeelement (33) umfasst:
dritte linke und rechte Führungsrollen (323), die auf der Oberseite der mittleren Querstange (121) in vorderen linken und rechten Abschnitten davon installiert sind, um in höheren Positionen als die zweite linke und rechte Führungsrolle (322) angeordnet zu sein, und die links und rechts von diesen in jeweils gleichem Abstand von diesen angeordnet sind, und
einen dritten Hebedraht (313) mit
einem Mittelteil, der mehrmals spiralförmig um die Wickelnut (231) gewickelt ist, um vom hinteren Abschnitt mit dem Mittelteil des zweiten Hebedrahts (312) getrennt zu sein,
einem linken Teil, der von einem vorderen unteren Abschnitt der linken Seite nach oben gerichtet ist, an einem oberen Abschnitt der dritten linken Führungsrolle (323) aufgehängt ist, die sich in einer vorderen Position unter den dritten linken und rechten Führungsrollen (323) befindet, und von einer linken Seite des oberen Abschnitts davon nach unten gerichtet ist, und
einem rechten Teil, der von einem hinteren unteren Abschnitt der rechten Seite nach oben gerichtet ist, an einem oberen Abschnitt der dritten rechten Führungsrolle (323) aufgehängt ist, die sich in einer hinteren Position befindet, und von einer rechten Seite des oberen Abschnitts davon nach unten gerichtet ist;
wobei das vierte Hebeelement (34) umfasst:
vierte linke und rechte Führungsrollen (324), die auf der Oberseite einer unteren Querstange (122) an hinteren linken und rechten Position derselben installiert sind, um in tieferen Positionen als die dritten linken und rechten Führungsrollen (323) angeordnet zu sein, und die links und rechts von diesen in jeweils gleichem Abstand von diesen angeordnet sind, und
einen vierten Hebedraht (314) mit
einem Mittelteil, der mehrmals spiralförmig um die Wickelnut (231) gewickelt ist, um vom vorderen Abschnitt des Mittelteils des ersten Hebedrahts (311) getrennt zu sein,
einen linken Teil, der von einem hinteren oberen Abschnitt der linken Seite nach unten gerichtet ist, an einem oberen Abschnitt der vierten linken Führungsrolle (324) aufgehängt ist, die sich in einer hinteren Position unter den vierten linken und rechten Führungsrollen (324) befindet, und von einer linken Seite des oberen Abschnitts davon nach unten gerichtet ist, und
einem rechten Teil, der von einem hinteren oberen Abschnitt der rechten Seite nach unten gerichtet ist, an einem oberen Abschnitt der vierten rechten Führungsrolle (324) aufgehängt ist, die sich in einer vorderen Position befindet, und von einer rechten Seite des oberen Abschnitts davon nach unten gerichtet ist; und
wobei das fünfte Hebeelement (35) umfasst:
fünfte linke und rechte Führungsrollen (325), die auf der Oberseite der mittleren Querstange (121) an vorderen und hinteren Abschnitten derselben installiert sind, um in höheren Positionen als die vierten linken und rechten Führungsrollen (324) angeordnet zu sein, und die links und rechts von diesen in jeweils gleichem Abstand von diesen angeordnet sind, und
einen fünften Hebedraht (315) mit
einem Mittelteil, der mehrfach spiralförmig um die Wickelnut (231) in einem Zustand gewickelt ist, in dem der vordere Abschnitt des Mittelteils vom hinteren Abschnitt des Mittelteils des dritten Hebedrahts (313) getrennt ist und der hintere Abschnitt des Mittelteils von dem vorderen Abschnitt des vierten Hebedrahts (314) getrennt ist,
einem linken Teil, der von einem vorderen unteren Abschnitt der linken Seite nach oben gerichtet ist, an einem oberen Abschnitt der fünften linken Führungsrolle (325) aufgehängt ist, die sich in einer vorderen Position unter den fünften linken und rechten Führungsrollen (325) befindet, und von einer linken Seite des oberen Abschnitts davon nach unten gerichtet ist, und
einem rechten Teil, der von einem hinteren unteren Abschnitt der rechten Seite nach oben gerichtet ist, an einem oberen Abschnitt der fünften rechten Führungsrolle (323) aufgehängt ist, die sich in einer hinteren Position befindet, und von einer rechten Seite des oberen Abschnitts davon nach unten gerichtet ist,
wobei die linken und rechten Kulturrinnen (40 und 40') der ersten bis fünften Hebeelemente (31 bis 35) unter Verwendung des einen Verzögerungsmotors (21) und der einen Antriebswelle (22) abwechselnd nacheinander in Zickzackform auf- und absteigen.

2. Pflanzenanbauvorrichtung nach Anspruch 1,
bei der die ersten bis fünften Hebedrähte (311 bis 315) konfiguriert sind, um in einer Zickzackform gleichzeitig abwechselnd nach oben und nach unten zu oberen Positionen und tieferen Positionen als der Antriebswelle (22) gerichtet zu sein.

3. Pflanzenanbauvorrichtung nach Anspruch 1,
bei der das erste bis fünfte Hebeelement (31 bis 35) ferner Anti-Versetzungsklammern (36) umfasst, in denen die ersten bis fünften linken und rechten Führungskettenräder (321 bis 325) installiert sind, um zu verhindern, dass die ersten bis fünften Hebeketten (311 bis 315) aus ihren Bewegungspfaden heraus versetzt werden.

## Revendications

1. Appareil de culture de plantes utilisant un système ascendant et descendant comprenant
une unité d'entraînement (20) installée sur des poutres (12) installées à intervalles réguliers dans une direction avant et arrière pour croiser horizontalement les sommets de montants intérieurs (11) d'une serre (10),
une unité ascenseur (30) installée pour être actionnée par l'unité d'entraînement (20), et des bacs de culture (40 et 40') gauche et droit configurés pour être montés et descendus par l'unité ascenseur (30),
dans lequel l'unité d'entraînement (20) comprend
un moteur de décélération (21),
un arbre d'entraînement (22) installé axialement sur les dessous de traverses centrales (121) des poutres (12) pour traverser les traverses centrales (121) dans la direction avant et arrière et pour être mis en rotation par le moteur de décélération (21), et
des organes de bobinage (23) montés axialement à intervalles réguliers sur l'arbre d'entraînement (22) et ayant une rainure de bobinage (231) spiralée ;
l'unité ascenseur (30) est configurée avec un ensemble de cinq organes ascenseurs comprenant de premier à cinquième organes ascenseurs (31 à 35) ;
le premier organe ascenseur (31) comprend
de premières poulies de guidage gauche et droite (321) installées sur le dessus de la traverse centrale (121) de la poutre (12) à des parties arrière gauche et droite de celle-ci pour être situées à des positions supérieures à l'arbre moteur (22) et écartées respectivement des côtés gauche et droit de l'arbre moteur (22) au même intervalle, et
un premier fil ascenseur (311) ayant
une partie centrale enroulée en spirale en plusieurs tours autour d'une partie d'extrémité arrière de la rainure d'enroulement (231),
une partie gauche dirigée vers le haut à partir d'une partie inférieure avant du côté gauche, suspendue à une partie supérieure de la première poulie de guidage gauche (321), située à une position avant parmi les premières poulies de guidage gauche et droite (321), et dirigée vers le bas du côté gauche de la partie supérieure de celle-ci, et
une partie droite dirigée vers le haut à partir d'une partie inférieure arrière du côté droit, suspendue à une partie supérieure de la première poulie de guidage droite (321), située à une position arrière, et dirigée vers le bas à partir du côté droit de la partie supérieure de celle-ci ;
le deuxième organe ascenseur (32) comprend
de deuxièmes poulies de guidage gauche et droite (322) installées sur le dessus d'une traverse inférieure (122) de la poutre (12) à des positions avant gauche et droite de celle-ci pour être situées à des positions inférieures aux premières poulies de guidage gauche et droite (321) et écartées respectivement des côtés gauche et droit de celles-ci au même intervalle et
un deuxième fil ascenseur (312) ayant
une partie centrale enroulée en spirale en plusieurs tours autour d'une partie d'extrémité avant de la rainure d'enroulement (231),
une partie gauche dirigée vers le bas depuis une partie supérieure arrière du côté gauche, suspendue à une partie supérieure de la deuxième poulie de guidage gauche (322) située à une position arrière parmi les deuxièmes poulies de guidage gauche et droite (322), et dirigée vers le bas à partir d'un côté gauche de la partie supérieure de celle-ci, et
une partie droite dirigée vers le bas à partir d'une partie supérieure arrière du côté droit, suspendue à une partie supérieure de la deuxième poulie de guidage droite (322), et dirigée vers le bas à partir du côté droit de la partie supérieure de celle-ci ;
le troisième organe ascenseur (33) comprend
de troisièmes poulies de guidage gauche et droite (323) installées sur le dessus de la traverse centrale (121) à des parties avant gauche et droite de celle-ci pour être situées à des positions supérieures aux deuxièmes poulies de guidage gauche et droite (322) et écartées respectivement des côtés droit et gauche de celles-ci au même intervalle et
un troisième fil ascenseur (313) ayant
une partie centrale enroulée en spirale en plusieurs tours autour de la rainure d'enroulement (231) de façon à être isolé de la partie arrière de la partie centrale du deuxième fil ascendant (312),
une partie gauche dirigée vers le haut depuis une partie avant inférieure du côté gauche, suspendue à une partie supérieure de la troisième poulie gauche (323), située à une position avant parmi les troisièmes poulies de guidage gauche et droite (323), et dirigée vers le bas à partir d'un côté gauche de la partie supérieure de celle-ci, et
une partie droite dirigée vers le haut à partir d'une partie inférieure arrière du côté droit, suspendue à une partie supérieure de la troisième poulie de guidage droite (323), située à une position arrière, et dirigée vers le bas à partir du côté droit de la partie supérieure de celle-ci ;
le quatrième organe ascenseur (34) comprend
de quatrièmes poulies de guidage gauche et droite (324) installées sur le dessus d'une traverse inférieure (122) à des positions arrière gauche et droite de celle-ci pour être situées à des positions inférieures aux troisièmes poulies de guidage gauche et droite (323) et écartées respectivement des cotés gauche et droite de celles-ci au même intervalle et
un quatrième fil ascenseur (314) ayant
une partie centrale enroulée en spirale en plusieurs tours autour de la rainure d'enroulement (231) de façon à être isolé de la partie avant de la partie centrale du premier fil ascenseur (311),
une partie gauche dirigée vers le bas depuis une partie supérieure arrière du côté gauche, suspendue sur une partie supérieure de la quatrième poulie de guidage gauche (324), située à une position arrière parmi le quatrièmes poulies de guidage gauche et droite (324), et dirigée vers le bas à partir d'un côté gauche de la partie supérieure de celle-ci, et
une partie droite dirigée vers le bas à partir d'une partie supérieure arrière du côté droit, suspendue à une partie supérieure de la quatrième poulie de guidage droite (324) située à une position avant, et dirigée vers le bas à partir du côté droit de la partie supérieure de celle-ci ; et
le cinquième organe ascenseur (35) comprend
de cinquièmes poulies de guidage gauche et droite (325) installées sur le dessus de la traverse centrale (121) à des parties avant et arrière de celle-ci pour être situées à des positions supérieures aux quatrièmes poulies de guidage gauche et droite (324) et écartées respectivement des côtés gauche et droit de celles-ci au même intervalle et
un cinquième fil ascenseur (315) ayant
une partie centrale enroulée en spirale en plusieurs tours autour de la rainure d'enroulement (231) dans un état où la partie avant de la partie centrale est isolée de la partie arrière de la partie centrale du troisième fil ascenseur (313) et la partie arrière de la partie centrale est isolée de la partie avant du quatrième fil ascenseur (314),
une partie gauche dirigée vers le haut depuis une partie avant inférieure du côté gauche, suspendue à une partie supérieure de la cinquième poulie de guidage gauche (325) située à une position avant parmi les cinquièmes poulies de guidage gauche et droite (325), et dirigée vers le bas depuis un côté gauche de la partie supérieure de celle-ci, et
une partie droite dirigée vers le haut depuis une partie inférieure arrière du côté droit, suspendue à une partie supérieure de la cinquième poulie de guidage droite (323) située à une position arrière, et dirigée vers le bas depuis un côté droit de la partie supérieure de celle-ci,
dans lequel les bacs de culture gauche et droite (40 et 40') des premier à cinquième organes ascenseurs (31 à 35) montent et descendent alternativement en zigzag en utilisant le premier moteur de ralentissement (21) et le premier arbre d'entraînement (22).

2. L'appareil de culture de plantes selon la revendication 1,
dans lequel les première à cinquième fils ascenseur (311 à 315) sont configurées pour être dirigées simultanément vers le haut et vers le bas alternativement à tour de rôle vers des positions supérieure et inférieure à l'arbre d'entraînement (22) dans une forme zigzag.

3. L'appareil de culture de plantes selon la revendication 1,
dans lequel les premier à cinquième organes ascenseurs (31 à 35) comprennent en outre des supports anti-dislocation (36) dans lesquels les premier à cinquième pignons de guidage gauche et droit (321 à 325) sont installés pour empêcher les première à cinquième chaînes ascenseurs (311 à 315) d'être disloquées de leurs chemins de déplacement.
